# EUROPÄISCHE PATENTSCHRIFT

(11) **EP 1 057 665 B1**
(45) Veröffentlichungstag und Bekanntmachung des Hinweises auf die Patenterteilung: **16.03.2005**
(21) Anmeldenummer: 00117760.9
(22) Anmeldetag: 29.05.1996
(51) Int. Cl.: B60G 9/00, B60G 7/00

(54) **Achsaufhängung für Starrachsen in Fahrzeugen**
Axle suspension for rigid axles in vehicles
Suspension d'essieu pour essieux rigides de véhicules

(30) Priorität: 16.06.1995 DE 19521874
(43) Veröffentlichungstag der Anmeldung: 06.12.2000
(62) Teilanmeldung aus: 96919592.4
(73) Patentinhaber: ZF Lemförder Metallwaren AG, 49448 Lemförde (DE)
(72) Erfinder: Buhl, Reinhard, 49163 Bohmte (DE)

(56) Entgegenhaltungen:
- EP-A- 0 430 368
- DE-A- 2 505 124
- DE-U- 9 218 307
- FR-A- 2 563 473
- GB-A- 1 465 891
- US-A- 4 084 838
- US-A- 4 556 234

## Beschreibung

Die Erfindung bezieht sich auf eine Achsaufhängung für Starrachsen in Fahrzeugen, insbesondere Nutzfahrzeugen, bei der zur Achsführung auf jeder Fahrzeugseite etwa auf gleicher Höhe wenigstens ein sich in Fahrzeuglängsrichtung erstreckender, die Fahrzeugachse mit dem Fahrzeugaufbau vertikal beweglich verbindender Längslenker eines Längslenkerpaares und davon in der Höhenlage abweichend ein Mehrfachlenker, welcher in jeweils zwei in Fahrzeugquerrichtung einen Abstand voneinander aufweisenden Gelenken einerseits mit der Fahrzeugachse und andererseits mit dem Fahrzeugaufbau verbunden ist. Die Achsaufhängung weist ferner eine seitlichen Wank- und Kippbewegungen durch Torsionsspannungen entgegenwirkende Stabilisierungseinrichtung auf.

Bekannt sind diese Ausbildungsmerkmale beispielsweise aus der gattungsgemäßen DE 25 23 916 -B2-. In der Druckschrift wird eine Hinterachsaufhängung für Kraftfahrzeuge offenbart, bei der zur Achsführung zwei, sich im wesentlichen parallel zur Fahrzeuglängsrichtung erstreckende, untere Längslenker und zwei sich dazu ebenfalls parallel erstreckende obere Längslenker vorgesehen sind, wobei ein verdrehweich ausgebildetes Kupplungsglied über eine Schraubverbindung an den beiden oberen Längslenkern in Querrichtung montiert ist und die Lenker somit verbindet. Dieses Kupplungsglied ist mit den beiden oberen Längslenkern in einem geringen Abstand zu ihren vorderen Anlenkungen am Aufbau des Fahrzeuges angeordnet und bildet somit eine Art Mehrfachlenker. Der Mehrfachlenker und die Stabilisierungseinrichtung sind als ein einstückiger, verwindbarer, beide Funktionen integrierender Vierpunktlenker mit definierter Verwindungskennlinie ausgebildet.

Aus JP 3-99915 (A) (Patents Abstracts of Japan M-1137 July 18, 1991 Vol. 15/No.283) ist darüber hinaus eine Achsaufhängung bekannt, bei der einerseits unterhalb der Fahrzeughinterachse zwei Längslenker über Molekulargelenke angelenkt und diese Lenker andererseits am Fahrzeugaufbau befestigt sind. Zusätzlich werden in dieser bekannten Ausführungsform etwa achsmittig zwei über eine Querstrebe verbundene Längslenker angeordnet. Nachteilig ist bei einer derartigen Achsaufhängung jedoch, dass die Wankneigung des Fahrzeuges um die Fahrzeugquerachse nicht hinreichend ausgeglichen werden kann. Durch die mittig angeordnete Querstrebe zwischen den Längslenkern ist eine solche Ausführung verdrehweich und vermag keine hinreichende Querstabilität zu gewährleisten.

Ferner geht aus EP 0 430 368 A1 eine Achsaufhängung für ein Kraftfahrzeug mit Gasfederung hervor, die einen Mehrfachlenker aufweist, der einerseits mit der Fahrzeugachse und andererseits mit dem Fahrzeugaufbau gelenkig verbunden ist und seitlichen Wank- und Kippbewegungen entgegenwirkt. Dieser Mehrfachlenker ist als Hohlkörper aus Blech hergestellt. Die Herstellung eines derartigen Bauelementes ist sehr aufwendig und damit kostenintensiv. Weiterhin sind bei der Verwendung von Blech als Grundmaterial Festigkeitsanforderungen nur begrenzt realisierbar.

Der Erfindung liegt die Aufgabe zugrunde, eine vereinfachte, raum- und kostensparende Gestaltung einer Achsaufhängung zu entwickeln.

Gelöst wird diese Aufgabe durch die Ausbildungsmerkmale des Patentanspruches 1. Ausgestaltungen der Erfindung sind Gegenstand der jeweiligen Unteransprüche.

Erreicht wird durch diese Ausbildungsmerkmale eine Integration der Elemente zur Achsführung und der Elemente zur Querstabilisierung des Fahrzeugaufbaus gegenüber der Fahrzeugachse in einem Bauteil.
Ein besonderer Vorteil der erfindungsgemäßen Ausbildung liegt in der Möglichkeit der Substitution bereits eingebauter Achsführungselemente durch eine erfindungsgemäß ausgebildete Achsaufhängung unter Verwendung der am Fahrzeugaufbau und an der Fahrzeugachse vorhandenen Lagerelemente.
Darüber hinaus ist es bei einer erfindungsgemäßen Ausführungsform einer Achsaufhängung möglich, die Wankstabilität sehr genau zu bestimmen, wobei gegenüber bekannten Ausführungen größere Kräfte und Drehmomente aufgenommen werden können.

Gesonderter Bauraum für die Lagerung eines Stabilisatorstabes ist nicht mehr erforderlich. Es entfallen die Lagerelemente für den Stabilisatorstab an der Fahrzeugachse und auch am Fahrzeugaufbau. Damit einhergehend ist die erfindungsgemäße Achsaufhängung gegenüber bekannten Ausbildungen kostensparend, weil sie weniger Einzelteile aufweist und weniger Montagearbeit erfordert.

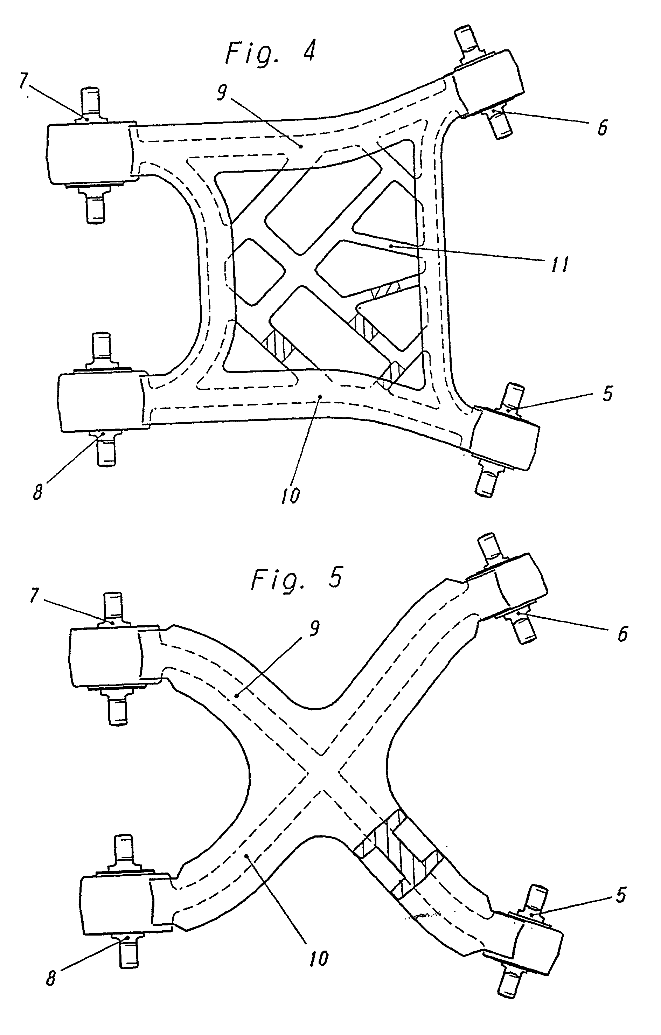

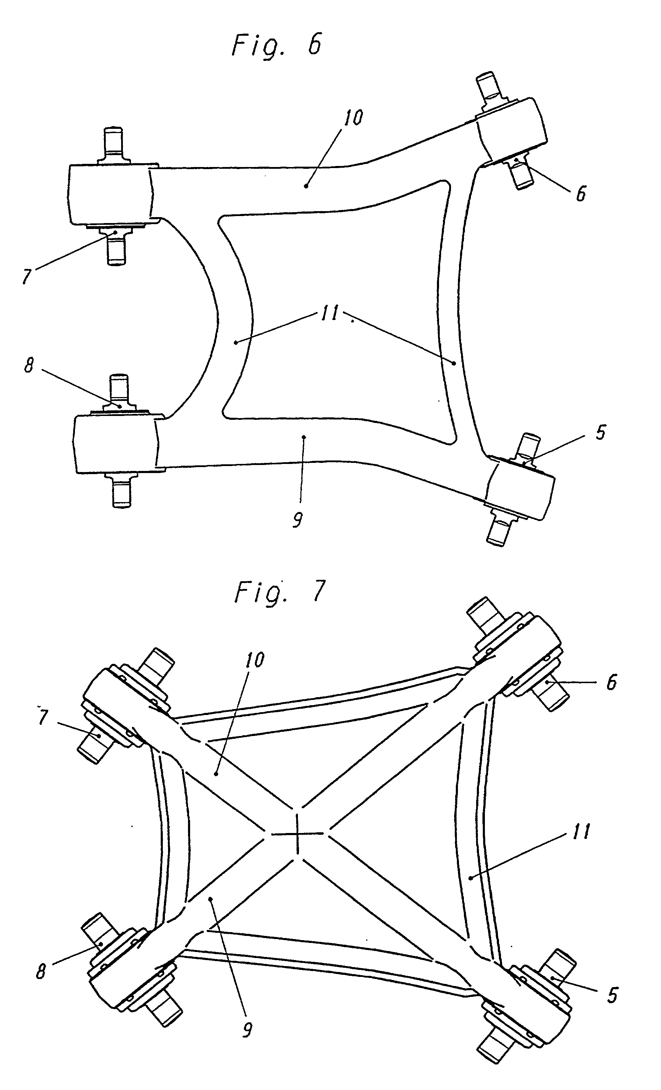

In Figuren 4 und 7 der Zeichnung sind Ausführungsbeispiele der Erfindung teils schematisch dargestellt. Es zeigen:
**Figur 1**: eine Draufsicht auf ein erstes Beispiel,
**Figur 2**: eine Seitenansicht der Anordnung nach Figur 1,
**Figur 3**: eine im Vergleich zu Figur 1 im Maßstab vergrößerte Ansicht des Vierpunktlenkers und
**Figuren 4 und 7:** Draufsichten auf Ausführungsbeispiele für die Gestaltung des Vierpunktlenkers. Die in Figuren 5, 6, 8-10 dargestellten Beispiele für die Gestaltung des Vierpunktlenkers sind nicht Gegenstand dieser Erfindung.

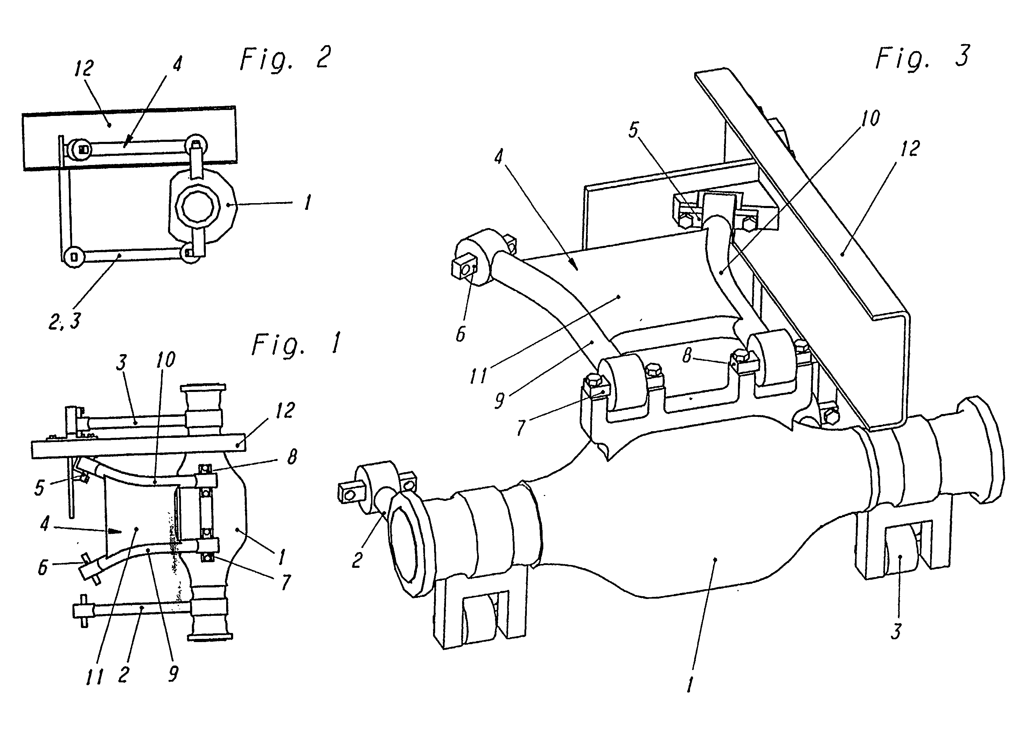

In den Ausführungsbeispielen ist die Fahrzeugachse 1 an beiden Fahrzeugseiten mit einem erheblichen Abstand von der Längsmitte des Fahrzeuges durch Längslenker 2 und 3 und in der Fahrzeugmitte durch einen in der Höhenlage dazu versetzt angeordneten Vierpunktlenker 4 mit dem Fahrzeugaufbau verbunden. Der Fahrzeugaufbau ist in den Figuren 1-3 bereichsweise schematisch dargestellt. In den Figuren 1-3 wird aus Gründen der besseren Übersichtlichkeit die nur die einseitige Anbindung des Vierpunktlenkers an den Fahrzeugrahmen 12 gezeigt. Die Gelenkverbindungen der Längslenker 2 und 3 befinden sich unterhalb der Fahrzeugachse 1, während der Vierpunktlenker 4 oberhalb der Fahrzeugachse 1 in einem gegenüber den Längslenkern 2 und 3 unterschiedlichen Höhenniveau angeordnet ist. Alle Gelenkverbindungen sind kardanisch beweglich ausgeführt und bestehen vorzugsweise aus Kugelgelenken.

Der Vierpunktlenker 4 in den nur zur Information und zum besseren Verständnis beigefügten Ausführungsbeispielen der Figuren 1 bis 3 besteht aus zwei stabilen Gelenkarmen 9 und 10, die durch ein plattenförmiges Flächentragwerk 11 fest miteinander verbunden sind, welches verwindbar ausgeführt ist, wobei die Verwindung einer definierten Kennlinie unterliegt. Die aus den Gelenkarmen 9 und 10 mit dem Flächentragwerk 11 gebildete Rahmenkonstruktion ist mit an den einen Enden der Gelenkarme 9 und 10 befestigten Gelenken 5 und 6 an der Fahrzeugkarosserie befestigbar und wird mit den an den anderen Enden der Gelenkarme 9 und 10 angeordneten Gelenken 7 und 8 an der Fahrzeugachse 1 bzw. an einem mit der Fahrzeugachse verbundenen Stützkörper 1.1 befestigt. Diese Ausbildung des Vierpunktlenkers 4 ermöglicht Pendelbewegungen der Fahrzeugachse 1 gegenüber der Fahrzeugkarosserie quer zur Fahrtrichtung. Die dabei auftretende Verwindung des Flächentragwerks ruft durch Torsionsspannungen Rückstellkräfte für die Wiederherstellung der Nullage hervor.
Wie in Figur 3 dargestellt, kann das Flächentragwerk im einfachsten Falle eine in sich geschlossenen plattenförmige Verbindung sein. Eine derartige Ausführung ist besonders einfach herstellbar und damit sehr kostengünstig. Darüber hinaus läßt sich hierbei der Drehmomentenverlauf innerhalb des Flächentragwerkes exakt bestimmen, sodass eine den Belastungsverhältnissen genau angepaßte konstruktive Auslegung möglich ist.

Die Figuren 4 und 7 zeigen unterschiedliche Ausbildungen des Vierpunktlenkers 4 gemäß der vorliegenden Erfindung. Die Gelenkarme 9 und 10 sind bei dem Ausführungsbeispiel nach der Figur 4 in ein Flächentragwerk aus unterschiedlich angeordneten Streben integriert, wobei die Lage der Streben und deren Querschnittsgestaltung ebenfalls eine ziemlich genaue Definierung der Kennlinie der sich bei der Verwindung des Flächentragwerks aufbauenden Rückstellkräfte ermöglicht. Die Gelenke zur Befestigung des Vierpunktlenkers einerseits an der Fahrzeugachse und andererseits an der Karosserie sind an den Enden der Gelenkarme 9 und 10 angeordnet.

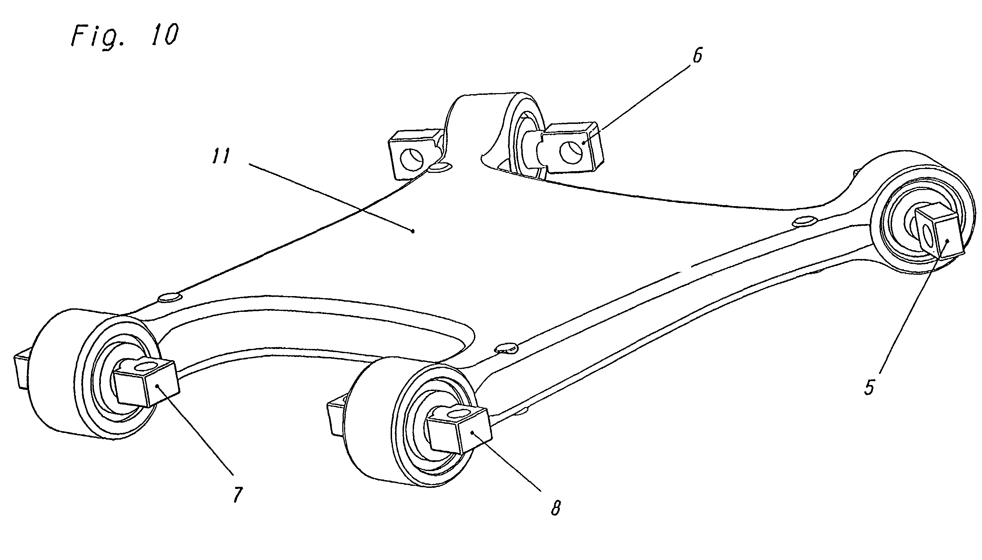

Die in Figuren 5, 6, 8, 9 und 10 gezeigten Darstellungen sind nicht Gegenstand dieser Erfindung.

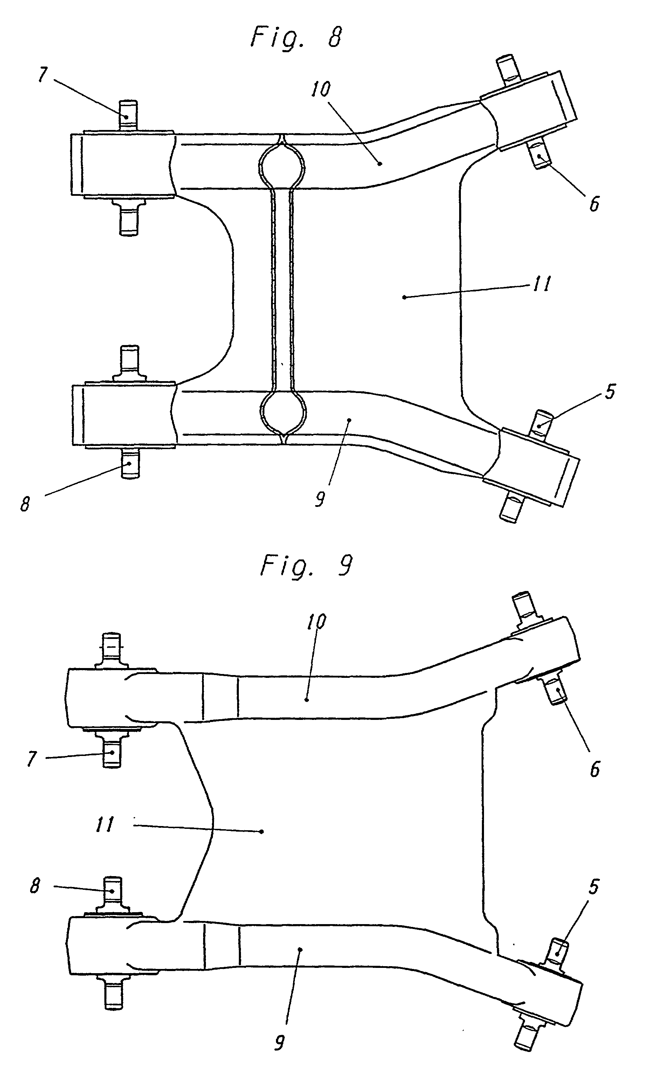

Die Figuren 6 und 8 geben Draufsichten eines Vierpunktlenkers wieder, bei dem die Gelenkarme 9 und 10 durch im wesentlichen geschlossene Flächentragwerke miteinander verbunden sind. Dieses Flächentragwerk ist in der Figur 6 durch Randverstärkungen zusätzlich versteift und bildet somit ein Rahmenprofil. Die Figuren 4-10 zeigen ferner die Möglichkeit der Anordnung von Ausschnitten in einem in sich geschlossenen Flächentragwerk zur Beeinflussung der Kennlinie der sich bei der Verwindung aufbauenden Rückstellkräfte, wobei die Ausführungen in Figuren 5, 6, 8, 9 und 10 nicht Gegenstand der vorliegenden Erfindung sind. Bei dem Ausführungsbeispiel gemäß Figur 7 sind die beiden Gelenkarme in sich kreuzender Lage angeordnet und bilden somit Rippen auf einem an den Rändern ebenfalls Verstärkungen aufweisenden Flächentragwerk. Ein vergleichbares Ergebnis läßt sich auch mit einem Vierpunktlenker in X-förmiger Draufsicht entsprechend der Darstellung in Figur 5 erreichen. An den Armenden des X-förmigen Kreuzes sind die Gelenke 5 und 6 für die Befestigung an der Karosserie und die Gelenke 7 und 8 für die Befestigung an der Fahrzeugachse angeordnet. Das Querschnittsprofil der Arme wird den Gegebenheiten angepaßt und kann beispielsweise doppel-T-förmig sein, wie es in der Zeichnungsfigur angedeutet ist, oder aus einem Hohlprofil bestehen. Hierfür sind unterschiedliche Materialien einsetzbar.
In der Figur 8 ist zwischen den Gelenkarmen 9 und 10 eine mögliche Profilierung des Vierpunktlenkers eingezeichnet, der in dem gezeigten Beispiel ein Hohlprofil ist.

### BEZUGSZEICHENLISTE:

- 1: Fahrzeugachse
- 1.1: Stützkörper
- 2: Längslenker
- 3: Längslenker
- 4: Vierpunktlenker
- 5: Gelenk
- 6: Gelenk
- 7: Gelenk
- 8: Gelenk
- 9: Gelenkarm
- 10: Gelenkarm
- 11: Flächentragwerk
- 12: Fahrzeugrahmen

## Patentansprüche

1. Achsaufhängung für Starrachsen in Fahrzeugen, insbesondere Nutzfahrzeugen, bei der zur Achsführung auf jeder Fahrzeugseite etwa auf gleicher Höhe wenigstens ein sich in Fahrzeuglängsrichtung erstreckender, die Fahrzeugachse (1) mit dem Fahrzeugaufbau vertikal beweglich verbindender Längslenker (2,3) eines Längslenkerpaares und davon in der Höhenlage abweichend ein Mehrfachlenker, welcher in jeweils zwei in Fahrzeugquerrichtung einen Abstand voneinander aufweisenden Gelenken (5,6),(7,8) einerseits mit der Fahrzeugachse (1) und andererseits mit dem Fahrzeugaufbau verbunden ist sowie eine seitlichen Wank- und Kippbewegungen durch Torsionsspannungen entgegenwirkende Stabilisierungseinrichtung vorgesehen ist, wobei
der Mehrfachlenker und die Stabilisierungseinrichtung als ein einstückiger, verwindbarer, beide Funktionen integrierender Vierpunktlenker (4) mit definierter Verwindungskennlinie ausgebildet ist,
**dadurch gekennzeichnet, dass**
der Vierpunktlenker (4) in Form eines im wesentlichen geschlossenen Flächentragwerkes (11) ausgebildet ist und das Flächentragwerk (11) eine verwindbare Rahmenkonstruktion mit einem in sich geschlossenen Rahmenprofil und dazwischen angeordneten Rippen ist.

2. Achsaufhängung nach Anspruch 1,
**dadurch gekennzeichnet, dass** der Vierpunktlenker (4) oberhalb der Fahrzeugachse ( 1 ) an diese angelenkt ist.

3. Achsaufhängung nach einem der vorstehend genannten Ansprüche,
**dadurch gekennzeichnet, dass**
der Vierpunktlenker (4) über Kugelgelenke (5,6) mit dem Fahrzeugaufbau und über Kugelgelenke (7,8) mit der Fahrzeugachse (1) verbunden ist.

## Claims

1. Axle suspension for rigid axles in vehicles, in particular commercial vehicles, in which, in order to guide the axle, there are provided on each vehicle side approximately at the same height at least one longitudinal control arm (2, 3), which extends in the longitudinal direction of the vehicle and connects the vehicle axle (1) to the vehicle body in a vertically mobile manner, of a control arm pair, and, differing therefrom in terms of vertical position, a multiple control arm which is connected at two respective joints (5, 6), (7, 8), disposed at a spacing from one another in the transverse direction of the vehicle, on one side to the vehicle axle (1) and on the other to the vehicle body, as well as a stabilising device which opposes lateral rolling and tilting movements through torsional stresses, wherein the multiple control arm and the stabilising device are formed as a one-piece four-point control arm (4) which is capable of twisting, integrates both functions and has a defined torsional characteristic,
**characterised in that**
the four-point control arm (4) is in the form of a substantially closed two-dimensional load-bearing member (11), and the two-dimensional load-bearing member (11) is a frame construction which is capable of twisting, has a self-contained frame profile and ribs disposed in between.

2. Axle suspension according to Claim 1,
**characterised in that** the four-point control arm (4) is articulated to the vehicle axle (1) above the latter.

3. Axle suspension according to either of the preceding Claims,
**characterised in that** the four-point control arm (4) is connected via ball joints (5, 6) to the vehicle body and via ball joints (7, 8) to the vehicle axle (1).

## Revendications

1. Suspension d'essieu pour essieux rigides de véhicules, notamment de véhicules utilitaires, dans laquelle il est prévu pour le guidage de l'essieu, de chaque côté du véhicule, à peu prés à la même hauteur, au moins un bras oscillant longitudinal (2, 3) appartenant à une paire de bras oscillants longitudinaux, qui s'étend dans la direction longitudinale du véhicule, et qui relie l'essieu du véhicule (1) à la caisse du véhicule en étant mobile dans la direction verticale, et un bras oscillant multiple, qui en est différent par sa position en hauteur, qui est relié, à chaque fois dans deux articulations (5, 6), (7, 8) présentant un certain écartement mutuel dans la direction transversale du véhicule, d'une part à l'essieu de véhicule (1) et, d'autre part à la caisse du véhicule, ainsi qu'un dispositif stabilisateur qui s'oppose aux mouvements de roulis et de renversements latéraux par des contraintes de torsion, cependant que le bras oscillant multiple et le dispositif stabilisateur sont réalisés sous la forme d'un bras oscillant à quatre points (4), en une seule pièce, susceptible de torsion, qui intègre les deux fonctions et qui possède une caractéristique de torsion définie,
**caractérisée en ce que**,
le bras oscillant à quatre points (4) est réalisé sous la forme d'une structure porteuse plane (11) essentiellement fermée sur elle-même, et la structure porteuse plane (11) est une construction de châssis susceptible de torsion, qui possède une forme profilée de châssis fermée sur elle-même et des nervures disposées à l'intérieur.

2. Suspension d'essieu selon la revendication 1,
**caractérisé en ce que**
le bras oscillant à quatre points (4) est articulé à l'essieu de véhicule (1) au-dessus de celui-ci.

3. Suspension d'essieu selon l'une quelconque des revendications précédentes,
**caractérisé en ce que**
le bras oscillant à quatre points (4) est relié à la caisse de véhicule par des l'intermédiaire d'articulations à rotule (5, 6) et à l'essieu de véhicule (1) par l'intermédiaire d'articulations à rotule (7, 8).
